# EUROPÄISCHE PATENTSCHRIFT

(11) **EP 1 830 951 B1**
(45) Veröffentlichungstag und Bekanntmachung des Hinweises auf die Patenterteilung: **07.01.2009**
(21) Anmeldenummer: 05823863.5
(22) Anmeldetag: 24.12.2005
(51) Int. Cl.: B01J 19/00, F28F 3/00, F28F 3/04

(54) **VERFAHREN ZUR HERSTELLUNG VON POLYMEREN**
METHOD FOR THE PRODUCTION OF POLYMERS
PROCEDE DE PRODUCTION DE POLYMERES

(30) Priorität: 28.12.2004 EP 04030883
(43) Veröffentlichungstag der Anmeldung: 12.09.2007
(73) Patentinhaber: Merck Patent GmbH, 64293 Darmstadt (DE)
(72) Erfinder: SCHULTE, Niels, 65779 Kelkheim (DE); BREUNING, Esther, 65527 Niedernhausen (DE); SPREITZER, Hubert, 68519 Viernheim (DE)
(86) Internationale Anmeldenummer: PCT/EP2005/014038
(87) Internationale Veröffentlichungsnummer: WO 2006/069773

(56) Entgegenhaltungen:
- WO-A-94/09063
- WO-A-98/15825
- WO-A-03/089130
- DD-A1- 246 257
- US-B1- 6 329 139

## Beschreibung

Konjugierte bzw. auch teilkonjugierte Polymere spielen auf dem Gebiet der organischen Halbleiter (z. B. für Anwendungen in polymeren Leuchtdioden, organischen Transistoren, organischen ICs, organischen Solarzellen, organischen Laserdioden, etc.) eine zunehmend wichtige Rolle. Typische Klassen dieser Polymere umfassen Poly-arylenvinylene (z. B. gemäß EP 0443861, WO 94/20589, WO 98/27136, EP 1025183, WO 99/24526 und EP 0964045), Poly-arylenacetylene oder Poly-arylene im weitesten Sinne. Typische Vertreter der Poly-arylene sind u. a. Polyfluorene (z. B. gemäß EP 842208 oder WO 00/22026), Poly-spirobifluorene (z. B. gemäß EP 707020 oder EP 894107), Poly-para-phenylene (z. B. gemäß WO 92/18552), Polycarbazole (z. B. gemäß WO 04/070772 oder WO 04/113468), Poly-dihydrophenanthrene (z. B. gemäß WO 05/014689), Poly-indenofluorene (z. B. gemäß WO 04/041901 oder WO 04/113412), Poly-phenanthrene (z. B. gemäß DE 102004020298.2) oder Polythiophene (z. B. gemäß EP 1028136) oder auch Copolymere, die verschiedene dieser Einheiten enthalten. Es können auch noch weitere Wiederholeinheiten vorhanden sein, die Aufgaben wie Ladungstransport oder Emission wahrnehmen. Dabei können die Polymere konjugiert, teilkonjugiert oder nicht-konjugiert sein.

Für die Herstellung konjugierter, teilkonjugierter oder nicht-konjugierter Poly-arylene haben sich verschiedene übergangsmetallkatalysierte Kupplungsreaktionen als geeignet erwiesen, insbesondere die Kupplung gemäß Suzuki (z. B. gemäß WO 03/048225, WO 99/20675 oder WO 00/53656) und die Kupplung gemäß Yamamoto (z. B. gemäß WO 04/022626), aber auch weitere Kupplungsreaktionen, beispielsweise die Kupplung gemäß Hartwig-Buchwald (z. B. J. F. Hartwig, Angew. Chem. Int. Ed. 1998, 37, 2047-2067), wenn es sich um Polymere mit Arylamingruppen handelt.

Diese Verfahren sind zum Teil schon relativ weit ausgearbeitet, so dass damit Polymere mit hohem Polymerisationsgrad erhalten werden können; jedoch weisen alle diese Verfahren verschiedene Probleme auf, so dass sie noch nicht als technologisch und ökologisch befriedigend angesehen werden können:
1) Alle diese Verfahren arbeiten mit großen Mengen organischer Lösemittel, die ökologisch bedenklich sind und im großen Maßstab eingesetzt ein Sicherheitsrisiko mit sich bringen. Hier wäre es wünschenswert, die Lösemittelmengen deutlich reduzieren zu können, um die Sicherheit für Mensch und Umwelt zu erhöhen.
2) Die Polykondensation gemäß dem Stand der Technik führt noch nicht zu völlig reproduzierbaren Ergebnissen, was wiederum einen Einfluss auf die elektronischen Eigenschaften bei der Herstellung der oben genannten elektronischen Vorrichtungen hat. So sind die Eigenschaften der Polymere beispielsweise vom Molekulargewicht, von Fehlstellen im Polymer und von den Endgruppen abhängig. Diese sind jedoch nach den Prozessen gemäß dem Stand der Technik noch nicht ausreichend genau kontrollierbar. Hier ist eine bessere Kontrolle erstrebenswert, um eine bessere Reproduzierbarkeit zu gewährleisten.
3) Für die Aufbringung der Polymere durch Drucktechniken, wie beispielsweise durch Tintenstrahldruck (InkJet-Printing), muss das Molekulargewicht des Polymers sehr genau eingestellt werden. Eine derartig genaue Kontrolle des Molekulargewichts bei der Reaktion ist mit den Methoden gemäß dem Stand der Technik bislang nicht möglich, so dass die Polymere nach der Reaktion häufig aufwändig nachbehandelt werden müssen (z. B. gemäß WO 03/019694), was jedoch meist mit einer Verschlechterung der elektronischen Eigenschaften einhergeht.
4) Die Polydispersität der nach dem Stand der Technik erhaltenen Polymere ist bislang noch meist deutlich höher als die theoretisch erreichbare Polydispersität von 2. Eigene Experimente haben jedoch gezeigt, dass Polymere mit einer höheren Polydispersität im Allgemeinen schlechtere Eigenschaften in der elektronischen Vorrichtung aufweisen, so dass hier eine Verbesserung erstrebenswert ist.
5) Die Reinheit der nach dem Stand der Technik erhaltenen Polymere, insbesondere der Gehalt an anorganischen Verunreinigungen, ist bislang noch nicht zufriedenstellend. Es ist jedoch bekannt, dass für die Verwendung in organischen elektronischen Vorrichtungen reinere Polymere bessere Ergebnisse zeigen.

Hieraus ist ersichtlich, dass immer noch ein deutlicher Verbesserungsbedarf bei Polykondensationsverfahren durch übergangsmetallkatalysierte Kupplungsreaktionen besteht.

Wir haben nun überraschend festgestellt, dass die oben genannten Probleme deutlich reduziert werden können bzw. völlig entfallen, wenn die entsprechende Polykondensation in einem kontinuierlichen Rohrreaktor, der sowohl ein Mikroreaktor wie auch ein Rohrreaktor mit etwas größerem Durchmesser sein kann, durchgeführt wie auch ein Rohrreaktor mit etwas größerem Durchmesser sein kann, durchgeführt wird. Der Aufbau von Mikroreaktoren ist beispielsweise in DD 246257 beschrieben. Eine Übersicht über Reaktionen in Mikroreaktoren geben beispielsweise K. Jähnisch et al. (Angew. Chem. 2004, 116, 410-451). Hierbei fällt auf, dass zwar bereits übergangsmetallkatalysierte Reaktionen, beispielsweise Kupplungen gemäß Suzuki oder gemäß Heck, im kontinuierlichen Rohrreaktor beschrieben sind, jedoch keine entsprechenden übergangsmetallkatalysierten Polykondensationen. Dies ist überraschend, da insbesondere die Poly-Suzuki-Reaktion, aber auch die Poly-Yamamoto-Reaktion oder die Poly-Hartwig-Buchwald-Reaktion, große Bedeutung zur Synthese konjugierter Polymere hat und auch zur Synthese teilkonjugierter oder nicht-konjugierter Polymere angewandt werden kann. Dies legt die Vermutung nahe, dass derartige Reaktionen, möglicherweise wegen der Entstehung hochviskoser Polymerlösungen und steifer, stäbchenförmiger Polymere, nicht im kontinuierlichen Rohrreaktor, insbesondere in Rohrreaktoren mit engem Durchmesser und Mikroreaktoren, durchgeführt werden könnten. Daher ist es nun besonders überraschend und unerwartet, dass diese Reaktion trotz der engen Kanäle des Reaktors deutlich besser und schneller abläuft als bei Standardreaktion gemäß dem Stand der Technik im Glaskolben oder im großtechnischen Maßstab im Kessel und zu Polymeren mit deutlich verbesserten Eigenschaften führt. Weiterhin lässt sich die Reaktion im kontinuierlichen Rohrreaktor mit größerer Reproduzierbarkeit durchführen und das Molekulargewicht genauer einstellen, und die Polymere können in größerer Reinheit erhalten werden. Ein weiterer technischer Vorteil ist, dass sich die Reaktion kontinuierlich durchführen lässt.

Gegenstand der Erfindung ist somit ein Verfahren zur Herstellung von Polymeren oder Oligomeren durch Polykondensation, wobei die Polykondensation durch C-C-oder C-N-Kupplungsreaktionen unter Übergangsmetallkatalyse in einem Lösemittel oder Lösemittelgemisch gegebenenfalls unter Zusatz mindestens einer Base und/oder mindestens eines Additivs erfolgt und wobei die übergangsmetallkatalysierte Kupplungsreaktion ausgewählt ist aus der Gruppe der Suzuki-Kupplungen, der Yamamoto-Kupplungen, der Hartwig-Buchwald-Kupplungen, der Stille-Kupplungen, der Heck-Kupplungen, der Sonogashira-Kupplungen, der Negishi-Kupplungen, der Hiyama-Kupplungen und der Grignard-Kreuzkupplungen, dadurch gekennzeichnet, dass die Reaktion in einem kontinuierlichen Rohrreaktor durchgeführt wird.

Ein kontinuierlicher Rohrreaktor im Sinne dieser Erfindung ist ein rohrförmiger Reaktor, der kontinuierlich zu betreiben ist. Besonders bevorzugt handelt es sich um einen Rohrreaktor mit engem Durchmesser bzw. um einen Mikroreaktor. Das Volumen des Rohrreaktors beträgt bevorzugt ≤ 20 ml, besonders bevorzugt ≤ 10 ml, ganz besonders bevorzugt ≤ 1 ml.

Ein Mikroreaktor im Sinne dieser Erfindung ist eine mikrosystemtechnische Apparatur mit einem Volumen ≤ 1000 µl, bevorzugt ≤ 500 µl. Dieser enthält Mischelement, in dem die Eduktlösungen wenigstens einmal intensiv vermischt werden, mindestens eine Reaktionsstrecke (= Verweilstrecke), bevorzugt eine Kapillare, besonders bevorzugt eine temperierbare Kapillare, potenziell mindestens ein Analysenelement und potenziell mindestens ein Entmischelement. Die Eingänge sind über Pumpen und Schläuche zugänglich. In die Verweilstrecke werden die Lösungen nach ihrer Durchmischung in einem Mischelement zur Verlängerung ihrer Verweilzeit geführt. Die Verweilzeit im Sinne dieser Erfindung ist die Zeit zwischen der Durchmischung der Monomere und gegebenenfalls weiterer Komponenten und der Aufarbeitung der resultierenden Reaktionslösung zur Reinigung und Isolierung des Polymers.

Es kommen verschiedene Materialien für den Bau des kontinuierlichen Rohrreaktors in Frage. Insbesondere eignen sich dafür Glas, Edelstahl, Keramik, Emaille, PTFE und PFA.

Die Kanäle des kontinuierlichen Rohrreaktors weisen bevorzugt einen Durchmesser von 10 µm bis 20 mm, besonders bevorzugt von 100 µm bis 10 mm, ganz besonders bevorzugt von 200 µm bis 5 mm, insbesondere 500 µm bis 2 mm auf. Dabei können die Kanäle sowohl rund als auch eckig sein oder auch andere Formen aufweisen, wobei die Größen unabhängig von der Form in ähnlichen Dimensionen liegen.

Bevorzugt werden die Lösungen so in den kontinuierlichen Rohrreaktor gepumpt, dass sie diesen mit einer Durchflussgeschwindigkeit von 0.01 µl/min bis 100 ml/min durchströmen. Dabei wird die Durchflussgeschwindigkeit und daher auch der Druck bevorzugt so angepasst, dass die Verweilzeit der Lösung im Reaktor ausreicht, um einen vollständigen Umsatz der Monomere zu gewährleisten und das gewünschte Molekulargewicht der Polymere einzustellen.

Der kontinuierlichen Rohrreaktor ist erfindungsgemäß bevorzugt temperierbar. Weiterhin verfügt er potenziell über die Möglichkeit zur Ultraschall-Behandlung, zur Mikrowellenbestrahlung und/oder zur photochemischen Bestrahlung.

Die erforderliche Verweilzeit bei dem erfindungsgemäßen Verfahren hängt von verschiedenen Parametern ab, wie z. B. der Temperatur, der Reaktivität der Edukte oder der Viskosität der Lösung. Dem Fachmann ist es möglich, diese Verweilzeit an die einzelnen Parameter anzupassen und so einen optimalen Reaktionsverlauf zu erzielen. So kann die Verweilzeit der Reaktionslösung in dem zum Einsatz kommenden System durch die Wahl der Durchflussgeschwindigkeit der Lösungen und durch deren Konzentration (und damit Viskosität) eingestellt werden.

Das Reaktionsgemisch kann auch durch zwei oder mehr in Reihe geschaltete kontinuierlichen Rohrreaktoren geführt werden. Hierdurch wird erreicht, dass auch bei erhöhter Durchflussgeschwindigkeit die Verweilzeit verlängert wird und die eingesetzten Monomere so umgesetzt werden, dass eine optimale Produktausbeute und das gewünschte Molekulargewicht der Polymere erreicht wird. Durch weitere in Reihe geschaltete kontinuierlichen Rohrreaktoren lässt sich auch in einem oder mehreren Folgeschritten die Reaktion direkt aufarbeiten, beispielsweise durch Extraktion und/oder Waschen der Reaktionslösung.

In einer anderen bevorzugten Ausführungsform der Erfindung wird die Zahl und die Anordnung der Rohre bzw. Kanäle in einem oder mehreren kontinuierlichen Rohrreaktor(en) so variiert, dass die Verweilzeit verlängert wird, so dass auch hier bei erhöhter Durchflussgeschwindigkeit ein optimaler Umsatz und das gewünschte Molekulargewicht des Polymers erreicht wird.

In einer weiteren bevorzugten Ausführungsform der Erfindung wird das Reaktionsgemisch durch zwei oder mehr parallel angeordnete kontinuierlichen Rohrreaktoren geleitet, um den Durchsatz zu erhöhen.

Bevorzugt beträgt die Verweilzeit der Reaktionslösung im kontinuierlichen Rohrreaktor ≤ 2 Stunden, besonders bevorzugt ≤ 1 Stunde, ganz besonders bevorzugt ≤ 20 Minuten, insbesondere ≤ 10 Minuten. Dabei fällt auf, dass die Reaktionszeit bei Polykondensation im kontinuierlichen Rohrreaktor deutlich niedriger liegt als bei Polykondensation gemäß dem Stand der Technik im Labormaßstab. So können auch schon bei einer Verweilzeit von weniger als 30 Minuten oder sogar in einigen Minuten ein vollständiger Umsatz und somit ein hohes Molekulargewicht erzielt werden.

Das erfindungsgemäße Verfahren kann in einem breiten Temperaturbereich durchgeführt werden, der im Wesentlichen durch die Temperaturbeständigkeit der zum Bau des kontinuierlichen Rohrreaktor-Systems eingesetzten Materialien und durch die physikalischen Eigenschaften der eingesetzten Lösungen begrenzt ist. Vorzugsweise wird das erfindungsgemäße Verfahren bei einer Temperatur von -80 bis +250 °C durchgeführt, besonders bevorzugt von 0 bis 200 °C, ganz besonders bevorzugt von 40 bis 130 °C. Erhöhte Temperaturen sind zu bevorzugen, da bei der Reaktion hochviskose Polymerlösungen entstehen. Bei erhöhter Temperatur sinkt deren Viskosität, und ein Transport der Lösung durch die Rohre und Kanäle des Reaktors und der Kapillaren kann leichter erfolgen. Außerdem benötigt man meist eine leichte thermische Aktivierung der Reaktion, da das Verfahren in der Regel nur schwach exotherm ist.

Das erfindungsgemäße Verfahren zur Polykondensation organischer Verbindungen durch übergangsmetallkatalysierte Kupplungsreaktionen wird üblicherweise unter einer Schutzgasatmosphäre, bevorzugt Stickstoff und/oder Argon, durchgeführt. Es kann aber auch ohne Verwendung einer Schutzgasatmosphäre durchgeführt werden.

Für die Durchführung des erfindungsgemäßen Verfahrens ist es erforderlich, die Reaktion möglichst in homogener oder mehrphasiger flüssiger Phase durchzuführen, die keine oder nur sehr kleine Feststoffpartikel enthält, da sonst die Kanäle der kontinuierlichen Rohrreaktoren verstopfen können, insbesondere wenn Mikroreaktoren bzw. Rohrreaktoren mit sehr engem Durchmesser und sehr feinen Kanälen verwendet werden.

Der Reaktionsverlauf kann mit verschiedenen analytischen Methoden verfolgt und gesteuert werden. So kann der kontinuierliche Rohrreaktor mit verschiedenen Sensoren bzw. Messfühlern ausgestattet sein. Vorzugsweise wird der Reaktionsverlauf durch Viskosimetrie verfolgt und gesteuert. Die Steuerung der Reaktion erfolgt bevorzugt über die Regelung der Temperatur und/oder gegebenenfalls über weiteres Zudosieren von Katalysatorlösung. Dabei ist die gemessene Viskosität der Lösung ein Maß für den Polymerisationsgrad und damit das Molekulargewicht des Polymers. Die Kontrolle der Reaktion ist bei Reaktionsführung im kontinuierlichen Rohrreaktor deutlich besser im Vergleich zu bekannten Verfahren gemäß dem Stand der Technik. Dadurch erhöht sich die Reproduzierbarkeit erheblich. Weitere mögliche analytische Methoden sind GPC, Sedimentation, Dampfdruckosmose, Lichtstreuung, Röntgenkleinwinkelstreuung und Endgruppen-NMR. Weiterhin kann der kontinuierliche Rohrreaktor über Fenster verfügen, beispielsweise für UV/vis-Spektroskopie, IR-Spektroskopie, Lichtstreuung und/oder Mikroskopie.

Nach der Reaktion wird das Polymer aus dem Reaktionsgemisch aufgearbeitet und isoliert. Dies kann einerseits nach herkömmlichen Methoden geschehen, indem die Reaktionslösung aus dem Rohrreaktor gesammelt und batchweise aufgearbeitet wird. Die Reaktionslösung kann jedoch auch direkt im kontinuierlichen Rohrreaktor bzw. in einem weiteren angekoppelten kontinuierlichen Rohrreaktor extrahiert und aufgearbeitet werden und muss nach der Aufarbeitung und Extraktion nur noch isoliert, eingedampft, sprühgetrocknet oder bevorzugt batchweise gefällt werden. Bevorzugt erfolgt die Extraktion und Aufarbeitung ebenfalls in einem kontinuierlichen Rohrreaktor.

Bei der Reaktion entsteht das Polymer durch eine Polykondensationsreaktion, also durch eine Reaktion, bei der bei jedem Reaktionsschritt ein kleines Molekül unter Bildung einer neuen Bindung zwischen den Monomeren abgespalten wird. Je nach Struktur der Monomere können dabei konjugierte, teilkonjugierte oder nicht-konjugierte Polymere entstehen. Konjugierte Polymere im Sinne dieser Erfindung sind Polymere, die in der Hauptkette hauptsächlich sp²-hybridisierte Kohlenstoffatome, die auch durch entsprechende Heteroatome ersetzt sein können, enthalten. Dies bedeutet im einfachsten Fall abwechselndes Vorliegen von Doppel-(bzw. ggf. auch Dreifach-) und Einfachbindungen in der Hauptkette. Hauptsächlich meint, dass natürlich auftretende Defekte, die zu Konjugationsunterbrechungen führen, den Begriff "konjugiertes Polymer" nicht entwerten. Hingegen würden Einheiten wie beispielsweise einfache Alkylbrücken, (Thio)Ether-, Ester-, Amid- oder Imidverknüpfungen eindeutig als nicht-konjugierte Segmente definiert. Unter einem teilkonjugierten Polymer wird ein Polymer verstanden, in dem längere konjugierte Abschnitte in der Hauptkette durch nicht-konjugierte Abschnitte unterbrochen sind, bzw. das längere konjugierte Abschnitte in den Seitenketten eines in der Hauptkette nicht-konjugierten Polymers enthält. Bevorzugt dient das erfindungsgemäße Verfahren der Herstellung konjugierter und teilkonjugierter Polymere.

Die Polymere weisen in der Regel 10 bis 10000, bevorzugt 50 bis 5000, besonders bevorzugt 50 bis 2000 Wiederholeinheiten auf. Dabei ist für die Polymere charakteristisch, dass sie eine Molekulargewichtsverteilung aufweisen, also eine Polydispersität. Die Polydispersität ist bevorzugt kleiner 10, besonders bevorzugt kleiner 5, ganz besonders bevorzugt kleiner 3.

Unter einer übergangsmetallkatalysierten C-C- bzw. C-N-Kupplungsreaktion im Sinne dieser Erfindung wird eine Kupplung zweier organischer Verbindungen unter Bildung einer neuen C-C- bzw. C-N-Bindung unter Katalyse eines Übergangsmetalls bzw. einer Übergangsmetallverbindung gegebenenfalls unter Zusatz mindestens einer Base und/oder mindestens eines weiteren Additivs verstanden, wobei von jeder der beiden organischen Verbindungen eine reaktive Gruppe abgespalten wird. Bevorzugt ist das Übergangsmetall bzw. die Übergangsmetallverbindung ausgewählt aus Palladium bzw. Palladiumverbindungen, Nickel bzw. Nickelverbindungen, Cobalt bzw. Cobaltverbindungen oder Eisen bzw. Eisenverbindungen. Besonders bevorzugt sind Palladium bzw. Palladiumverbindungen oder Nickel bzw. Nickelverbindungen. Für die Bildung von Polymeren ist es dabei erforderlich, dass jedes Monomer mindestens zwei reaktive Gruppen trägt, die in der Kupplungsreaktion miteinander oder mit den reaktiven Gruppen eines anderen Monomers zur Reaktion gebracht werden können. Eine reaktive Gruppe im Sinne der vorliegenden Erfindung ist jede Gruppe, deren Bindung zu einem Kohlenstoffatom bzw. einem Stickstoffatom des Monomers im Verlauf der Kupplungsreaktion gespalten wird und welche dann aus dem Monomer austritt. Dies kann auch ein einzelnes Atom, z. B. ein Halogen oder ein Wasserstoffatom sein.

Als Monomere, die wenigstens zwei reaktive Gruppen aufweisen, können bei dem erfindungsgemäßen Verfahren alle dem Fachmann als Monomere derartiger Kupplungsreaktionen bekannten organischen Verbindungen mit wenigstens zwei reaktiven Gruppen eingesetzt werden. Dabei kommen als reaktive Gruppen die unten unter X und Y näher ausgeführten Gruppen in Frage.

Dabei folgt die Polykondensationsreaktion bevorzugt der in Schema 1 oder Schema 2 dargestellten Reaktion:

n X-Ar-X + n Y-M-Y → ---[Ar-M]ₙ--- + X-Y (Schema 1)

n X-Ar-(M)ₘ-Y → ---[Ar-(M)ₘ]ₙ--- (Schema 2)

wobei die verwendeten Symbole und Indizes die folgende Bedeutung haben:
- X: ist bei jedem Auftreten gleich oder verschieden Chlor, Brom, Iod, Fluoralkylsulfonat oder Perfluoralkylsulfonat, z. B. Trifluormethansulfonat oder Nonafluorbutansulfonat;
- Y: ist bei jedem Auftreten gleich oder verschieden X oder B(OH)₂, B(OR)₂, BR₂, SnR₃, NR-H, NH₂, MgCl, MgBr, Mgl, SiR₂F, SiRF₂, ZnCl, ZnBr, Znl oder auch H, falls dieses direkt an eine vinylische oder acetylenische Bindung von M gebunden ist;
- Ar: ist bei jedem Auftreten gleich oder verschiedenen ein bivalentes aromatisches oder heteroaromatisches Ringsystem mit 5 bis 60 aromatischen Ringatomen, welches auch durch einen oder mehrere Reste F, Cl, Br, I, R oder OR substituiert sein kann;
- M: ist bei jedem Auftreten gleich oder verschieden eine Gruppe Ar, oder M ist gleich oder verschieden eine organische Gruppe mit 1 bis 60 C-Atomen, bevorzugt eine Gruppe Ar, die durch eine oder mehrere, bevorzugt zwei oder mehr, Vinyl- oder Acetylengruppen substituiert ist;
- R: ist bei jedem Auftreten gleich oder verschieden H, eine geradkettige Alkylkette mit 1 bis 40 C-Atomen oder eine verzweigte oder cyclische Alkylkette mit 3 bis 40 C-Atomen, in der auch ein oder mehrere nicht benachbarte C-Atome durch N-R¹, -O-, -S-, -O-CO-O-, -CO-O-, -CR¹=CR¹-, -C≡C- ersetzt sein können und in der auch ein oder mehrere H-Atome durch F, Cl, Br, I oder CN ersetzt sein können, oder ein aromatisches oder heteroaromatisches Ringsystem mit 5 bis 60 aromatischen Ringatomen, welches auch durch einen oder mehrere nicht- aromatische Reste R substituiert sein kann; dabei können auch zwei oder mehrere der Reste R miteinander ein Ringsystem bilden;
- R¹: ist bei jedem Auftreten gleich oder verschieden H oder ein aliphatischer oder aromatischer Kohlenwasserstoffrest mit 1 bis 20 C-Atomen;
- n: ist bei jedem Auftreten eine Zahl zwischen 10 und 10000;
- m: ist bei jedem Auftreten 0 oder 1;
die gestrichelte Bindung bedeutet dabei die Verknüpfung in die Polymerkette.

Ebenso ist es möglich, dass die Monomere mehr als zwei reaktive Gruppen X und/oder Y tragen. Derartige Monomere führen zur Verzweigung der Polymerkette. Weiterhin ist es möglich, Verbindungen mit nur einer reaktiven Gruppe X oder Y zuzusetzen. Derartige Verbindungen werden an das Ende der Polymerkette eingebaut.

Unter einem aromatischen bzw. heteroaromatischen Ringsystem im Sinne dieser Erfindung soll ein System verstanden werden, das nicht notwendigerweise nur aromatische bzw. heteroaromatische Gruppen enthält, sondern in dem auch mehrere aromatische bzw. heteroaromatische Gruppen durch eine kurze nicht-aromatische Einheit (< 10 % der von H verschiedenen Atome, bevorzugt < 5 % der von H verschiedenen Atome), wie beispielsweise sp³-hybridisierter C, N, etc., aber auch C=O etc. unterbrochen sein können. So sollen also beispielsweise auch Systeme wie 9,9'-Spirobifluoren, 9,9-Diarylfluoren, Triarylamin, Diarylether, etc. als aromatische Ringsysteme verstanden werden. Weiterhin wird im Sinne dieser Erfindung auch der Einbau von Keto-, Phosphinoxid-, Sulfoxid- und Sulfongruppen zwischen zwei oder mehrere Arylgruppen als aromatisches Ringsystem im Sinne dieser Erfindung betrachtet, ebenso wie der Einbau von Metallkomplexen mit aromatischen Liganden.

Im Rahmen der vorliegenden Erfindung werden unter einer C₁- bis C₄₀-Alkylgruppe, in der auch einzelne H-Atome oder CH₂-Gruppen durch die oben genannten Gruppen substituiert sein können, besonders bevorzugt die Reste Methyl, Ethyl, - n-Propyl, i-Propyl, n-Butyl, i-Butyl, s-Butyl, t-Butyl, 2-Methylbutyl, n-Pentyl, s-Pentyl, Cyclopentyl, n-Hexyl, Cyclohexyl, n-Heptyl, Cycloheptyl, n-Octyl, Cyclooctyl, 2-Ethylhexyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Heptenyl, Cycloheptenyl, Octenyl, Cyclooctenyl, Ethinyl, Propinyl, Butinyl, Pentinyl, Hexinyl oder Octinyl verstanden. Unter einer C₁- bis C₄₀-Alkoxygruppe werden besonders bevorzugt Methoxy, Ethoxy, n-Propoxy, i-Propoxy, n-Butoxy, i-Butoxy, s-Butoxy, t-Butoxy oder 2-Methylbutoxy verstanden. Unter einem aromatischen oder heteroaromatischen System mit 1-30 C-Atomen, welches noch jeweils mit den oben genannten Resten R¹ substituiert sein kann und welches über beliebige Positionen am Aromaten bzw. Heteroaromaten verknüpft sein kann, werden insbesondere Gruppen verstanden, die abgeleitet sind von Benzol, Naphthalin, Anthracen, Phenanthren, Pyren, Chrysen, Perylen, Fluoranthen, Tetracen, Pentacen, Benzpyren, Biphenyl, Biphenylen, Terphenyl, Terphenylen, Fluoren, Spirobifluoren, Dihydrophenanthren, Dihydropyren, Tetrahydropyren, cis- oder trans-Indenofluoren, Furan, Benzofuran, Isobenzofuran, Dibenzofuran, Thiophen, Benzothiophen, Isobenzothiophen, Dibenzothiophen, Pyrrol, Indol, Isoindol, Carbazol, Pyridin, Chinolin, Isochinolin, Acridin, Phenanthridin, Benzo-5,6-chinolin, Benzo-6,7-chinolin, Benzo-7,8-chinolin, Phenothiazin, Phenoxazin, Pyrazol, Indazol, Imidazol, Benzimidazol, Naphthimidazol, Phenanthrimidazol, Pyridimidazol, Pyrazinimidazol, Chinoxalinimidazol, Oxazol, Benzoxazol, Naphthoxazol, Anthroxazol, Phenanthroxazol, Isoxazol, 1,2-Thiazol, 1,3-Thiazol, Benzothiazol, Pyridazin, Benzopyridazin, Pyrimidin; Benzpyrimidin, Chinoxalin, Pyrazin, Phenazin, Naphthyridin, Azacarbazol, Benzocarbolin, Phenanthrolin, 1,2,3-Triazol, 1,2,4-Triazol, Benzotriazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 1,3,5-Triazin, 1,2,4-Triazin, 1,2,3-Triazin, Tetrazol, 1,2,4,5-Tetrazin, 1,2,3,4-Tetrazin, 1,2,3,5-Tetrazin, Purin, Pteridin, Indolizin und Benzothiadiazol.

In einer bevorzugten Ausführungsform der Erfindung sind bei einer Reaktion alle Gruppen X gleich gewählt und alle Gruppen Y gleich gewählt.

X ist bevorzugt Br oder I, besonders bevorzugt Br.

Y ist bevorzugt X oder B(OR)₂, BR₂, SnR₃, SiR₂F oder SiRF₂, wobei R eine aliphatische Gruppe darstellt, oder NR-H, wobei R eine aromatische oder aliphatische Gruppe darstellt, oder B(OH)₂, MgCl, MgBr, Mgl, ZnCl, ZnBr, Znl oder auch H, falls dieses direkt an eine vinylische oder acetylenische Bindung von M gebunden ist.

Die übergangsmetallkatalysierte Kupplungsreaktion ist bevorzugt ausgewählt aus der Gruppe der Suzuki-Kupplungen, der Yamamoto-Kupplungen, der Hartwig-Buchwald-Kupplungen, der Stille-Kupplungen, der Heck-Kupplungen, der Die übergangsmetallkatalysierte Kupplungsreaktion ist ausgewählt aus der Gruppe der Suzuki-Kupplungen, der Yamamoto-Kupplungen, der Hartwig-Buchwald-Kupplungen, der Stille-Kupplungen, der Heck-Kupplungen, der Sonogashira-Kupplungen, der Negishi-Kupplungen, der Hiyama-Kupplungen und der Grignard-Kreuzkupplungen (Kumada-Kupplungen). Ein allgemeiner Überblick über diese Kupplungsreaktionen und die dafür üblicherweise verwendeten Reaktionsbedingungen findet sich in Cross Coupling Reactions (Topics in Current Chemistry, Ed. N. Miyaura, 219, Springer-Verlag 2002) und in Metal-catalyzed Cross-coupling Reactions (Ed. F. Diederich, P. J. Stang, Wiley-VCH, 1998).

Als Katalysatoren können bei dem erfindungsgemäßen Verfahren alle dem Fachmann bekannten, für Kupplungsreaktionen organischer Verbindungen geeigneten homogenen und heterogenen Katalysatoren oder Gemische aus mindestens zwei dieser Katalysatoren eingesetzt werden. Dies sind, wie bereits erwähnt, insbesondere Katalysatoren basierend auf Palladium-Verbindungen bzw. metallischem Palladium oder auch auf Nickel-Verbindungen bzw. metallischem Nickel. Katalysatoren im Sinne der Erfindung umfassen auch in-situ gebildete Katalysatoren, d. h. Katalysatoren, die unmittelbar vor oder während der Kupplungsreaktion beispielsweise aus einer metallhaltigen Vorstufe des Katalysators bzw. einem Metallsalz, gegebenenfalls unter Zusatz eines oder mehrerer geeigneter Liganden, gebildet werden.

In einer bevorzugten Ausführungsform der vorliegenden Erfindung wird als Katalysator bzw. Katalysatorvorstufe wenigstens eine Verbindung eingesetzt, die Palladium in der Oxidationsstufe 0 enthält, gegebenenfalls in Gegenwart wenigstens eines Liganden. Vorzugsweise wird hier Tetrakis(triarylphosphin)palladium(0), insbesondere Tetrakis(triphenylphosphin)palladium(0) und Tetrakis(tri-o-tolylphosphin)palladium(0) eingesetzt, aber auch Tris(dibenzylidenaceton)dipalladium(0) (Pd₂dba₃) oder Bis(tri-tert-butylphosphin)palladium(0).

Ebenfalls bevorzugt wird in dem erfindungsgemäßen Verfahren als Katalysator bzw. Katalysatorvorstufe wenigstens eine Verbindung, die Palladium in der Oxidationsstufe +II enthält, gegebenenfalls in Gegenwart wenigstens eines Liganden eingesetzt. Bevorzugt sind Palladium(II)halogenide, insbesondere Palladium(II)chlorid, Palladium(II)carboxylate, insbesondere Palladium(II)acetat, Dichlor-bis(triphenylphosphin)palladium(II), Palladium(II)-β-ketoketonate, insbesondere Palladium(II)acetylacetonat, Nitrilpalladium(II)halogenide, oder ein Gemisch aus wenigstens zwei dieser Verbindungen. Dabei ist es auch möglich, dass Palladium(II) während der Reaktion zu Palladium(0) reduziert wird.

Zu den Palladium(II)verbindungen werden bevorzugt Liganden zugesetzt. Dies sind insbesondere Phosphin-Liganden aus der Gruppe der Triarylphosphine, Triheteroarylphosphine, Diarylalkylphosphine, Diheteroarylalkylphosphine, Aryldialkylphosphine, Heteroaryldialkylphosphine oder Trialkylphosphine, wobei die Substituenten am Phosphor gleich oder verschieden, chiral oder achiral sein können, wobei ein oder mehrere der Substituenten die Phosphorgruppen mehrerer Phosphine verknüpfen können und wobei diese Verknüpfungen auch über ein oder mehrere Metallatome erfolgen können. Des Weiteren können Halogenphosphine, Dihalogenphosphine, Alkoxyphosphine, Aryloxyphosphine, Heteroaryloxyphosphine, Dialkoxyphosphine, Diaryloxyphosphine oder Diheteroaryloxyphosphine verwendet werden. Besonders bevorzugte Phosphinliganden sind Tris(o- oder m- oder p-tolyl)phosphin, Tris(o- oder m- oder p-anisyl)phosphin, Tris(o- oder m- oder p-fluorphenyl)phosphin, Tris(o- oder m- oder p-chlorphenyl)phosphin, Tris(2,6-dimethylphenyl)phosphin, Tris(2,6-dimethoxyphenyl)phosphin, Tris(mesityl)phosphin, Tris(2,4,6-trimethoxyphenyl)phosphin, Tris(pentafluorphenyl)phosphin, *tert*-Butyl-dio-tolylphosphin, Di-*tert*-butyl-*o*-tolylphosphin, Dicyclohexyl-2-biphenylphosphin, Di-*tert*-butyl-2-biphenylphosphin, Triethylphosphin, Tri-*iso*-propyl-phosphin, Tricyclohexylphosphin, Tri-*tert*-butylphosphin, Tri-*tert*-pentylphosphin, Bis(di-*tert-*butylphosphino)methan und 1,1'-Bis(di-*tert*-butylphosphino)ferrocen.

Weiterhin kommen auch allgemein diskrete Verbindungen von Palladium(0) oder Palladium(II) mit den oben beschriebenen zusätzlichen Liganden in Frage.

Auch der Einsatz sulfonierter Liganden (z. B. EP 0694530) zur Bildung wasserlöslicher Palladiumkomplexe ist möglich. Dies kann Vorteile bei der Aufarbeitung bieten, da hierbei der wasserlösliche Katalysator einfach durch Phasentrennung abgetrennt werden kann und keine aufwändigen Extraktionsverfahren nötig sind.

Ebenso möglich ist der Einsatz heterogener bzw. immobilisierter Palladiumkatalysatoren (z. B. WO 04/016348). Während heterogene Katalysatoren bei einer Reaktionsführung gemäß dem Stand der Technik allgemein den Nachteil bieten, dass durch die kleinere Oberfläche im Vergleich zur homogenkatalytischen Reaktion niedrigere Umsätze und vor allem geringere Selektivitäten erzielt werden, ist im kontinuierlichen Rohrreaktor eine heterogenkatalytische Reaktionsführung besser möglich, da hier das Verhältnis Oberfläche zu Volumen deutlich größer ist als im Standardreaktor oder Kolben. Dabei können die heterogenen bzw. immobilisierten Palladiumkatalysatoren kolloidal, dispers, ungeträgert oder an verschiedene Trägermaterialien gebunden sein, bevorzugt an Kieselgur, Silicia, Aluminiumoxid, Kohle bzw. besonders bevorzugt auch an die Reaktorwandung.

Weiterhin kommen Nickel und Nickelverbindungen, insbesondere Nickel(0)verbindungen, zum Einsatz. Hier eignen sich beispielsweise elementares Nickel bzw. auch disperses oder kolloidales metallisches Nickel, geträgert oder ungeträgert, wie Nickelschwamm, Nickel auf Kieselgur, Nickel auf Aluminiumoxid, Nickel auf Silica, Nickel auf Kohle, Nickel gebunden an die Mikroreaktorwandung, Nickel(II)carboxylate, insbesondere Nickel(II)acetat, Nickel(II)formiat und Nickel(II)oxalat, Nickel(II)ketoketonate, insbesondere Nickel(II)acetylacetonat, Nickel(II)halogenide, insbesondere Nickel(II)chlorid, -bromid und -iodid, Nickel(II)carbonat, Nickel(II)nitrat, Nickel(II)sulfat oder daraus ableitbare Komplexe wie Olefinnickel(II)halogenide, Allylnickel(II)halogenide, Additionsverbindungen des Typs NiL₂(Hal)₂ wobei Hal Chlor, Brom, Iod und L einem neutralen Liganden, wie z. B. Ammoniak, Acetonitril, Propionitril oder Benzonitril, entspricht, Bis(cydooctadien)nickel(0), Tetrakis(triphenylphosphin)nickel(0) oder weitere Nickel(0)verbindungen.

Für manche der oben genannten Kupplungsreaktionen ist es hilfreich oder erforderlich, wenn zusätzlich zu den Monomeren und dem Katalysator noch eine Base eingesetzt wird. Die Wahl der Base hängt von der Kupplungsreaktion und der genauen Reaktionsführung ab. Als Base können alle dem Fachmann bekannten, für Kupplungsreaktionen organischer Verbindungen geeigneten Basen eingesetzt werden. Bevorzugte Basen sind organische Hydroxide, Alkali- und Erdalkalimetallhydroxide, -oxide, -carboxylate, -carbonate, -hydrogencarbonate, -phosphate, -hydrogenphosphate und -fluoride, insbesondere Natrium- und Kaliumhydroxid, -acetat, -carbonat, -hydrogencarbonat,-phosphat und -fluorid, oder auch Metallalkoholate; bevorzugt sind Phosphate bzw. Carbonate, aber auch organische Hydroxide, beispielsweise Tetraalkylammoniumhydroxid. Für wasserfreie Reaktionen wird wegen der besseren Löslichkeit der entsprechenden Salze in organischen Lösemitteln bevorzugt ein schwereres Alkalimetall als Gegenion eingesetzt, besonders bevorzugt Caesium. Weiterhin können als Base organische Amine, bevorzugt Triethylamin, Diethylamin oder Tri-n-butylamin, oder Stickstoffhaltige, gegebenenfalls aromatische Heterocyclen, bevorzugt Pyridin oder N-Methylpyrrolidon eingesetzt werden. Es können auch Mischungen der Basen verwendet werden.

Für das erfindungsgemäße Verfahren ist es wesentlich, dass die eingesetzten Monomere und gegebenenfalls auch der Katalysator, falls kein heterogener Katalysator eingesetzt wurde, in gelöster oder gegebenenfalls auch fein suspendierter Form vorliegen, bevorzugt in gelöster Form. Insbesondere auch um das Polymer als Reaktionsprodukt zu lösen, muss ein geeignetes Lösemittel verwendet werden. Die Lösemittel sind bevorzugt ausgewählt aus der Gruppe der aromatischen Lösemittel, insbesondere Toluol, Anisol, Chlorbenzol, Xylole, Mesitylen oder Phenylether, geradkettigen, verzweigten oder cyclischen Ether, insbesondere Diethylether, Methyl-tert-butylether, Tetrahydrofuran, Dioxan oder Polyethylenglycolether, N-haltigen heterocyclischen Lösemittel, insbesondere Pyridin, Alkohole, insbesondere Methanol, Ethanol, Propanol, iso-Propanol, tert-Butanol oder Ethylenglycol, dipolar aprotischen Lösemittel, insbesondere DMF, Dimethylacetamid, NMP (N-Methylpyrrolidon) oder DMSO, organischen Ester, Nitrile, insbesondere Benzonitril oder Acetonitril, Sulfoxide, organischen Amide und organischen Carbonate, halogenierten Lösemittel, insbesondere Dichlormethan, Chloroform, 1,2-Dichlorethan oder 1,1,2,2-Tetrachlorethan, oder geradkettigen, verzweigten oder cyclischen Kohlenwasserstoffe oder ein Gemisch aus wenigstens zwei der vorstehend genannten Lösemittel. Bevorzugt sind aromatische Lösemittel bzw. Lösemittelmischungen, die mindestens ein aromatisches Lösemittel enthalten.

Auch der Zusatz von Wasser kann sich als sinnvoll erweisen, beispielsweise um eine Base oder ein anorganisches Salz zu lösen. Dabei kann es sinnvoll sein, die Reaktion einphasig oder zweiphasig zu führen. Für zweiphasige Reaktionsführung kann es hilfreich sein, zusätzlich einen Phasentransferkatalysator zu verwenden. Weiterhin kann der Zusatz mindestens eines Lösemittels, das mit Wasser und mit der organischen Phase mischbar ist, sinnvoll sein, so dass der Kontakt zwischen den in den verschiedenen Phasen gelösten Verbindungen erhöht wird.

Im Folgenden werden bevorzugte Ausführungsformen für die einzelnen Typen von Kupplungsreaktionen beschrieben.

Unter der Kupplung gemäß Suzuki wird die Kupplung eines aromatischen, heteroaromatischen oder vinylischen Borderivats mit einem aromatischen oder heteroaromatischen Halogenid oder Sulfonat in Anwesenheit einer Base unter Übergangsmetall-Katalyse verstanden. Dabei ist das Borderivat bevorzugt ausgewählt aus der Gruppe der Boronsäuren, Borinsäuren, Boronsäureanhydride oder offenkettigen oder cyclischen Boronsäureester, insbesondere Glycol- oder Pinakolester. Als Katalysatoren werden bevorzugt Palladiumverbindungen gewählt. Dabei sind die Liganden am Palladium für mehrphasige Reaktionen bevorzugt Triarylphosphine, insbesondere Triphenylphosphin und Tri-o-tolylphosphin. Als Lösemittel werden bevorzugt aromatische Lösemittel oder Ether verwendet. Als Basen haben sich Alkalimetallcarbonate und -phosphate als besonders geeignet erwiesen. Für die wasserfreie Suzuki-Kupplung werden bevorzugt Trialkylphosphinliganden, insbesondere Tri-tert-butylphosphin und Tricyclohexylphosphin in Verbindung mit CsF, KF oder Cs₂CO₃ als Base verwendet.

Unter der Kupplung gemäß Yamamoto wird die Kupplung zweier aromatischer oder heteroaromatischer Halogenide und/oder Sulfonate in Anwesenheit eines Übergangsmetall-Katalysators und gegebenenfalls eines Reduktionsmittels zur katalytischen Reaktionsführung verstanden. Für die Yamamoto-Kupplung sind alle reaktiven Gruppen Halogenide, insbesondere Bromide oder Iodide, bzw. Sulfonate. Dabei kommen als Katalysator vor allem Nickelverbindungen in Frage, wobei es hier für die katalytische Reaktionsführung notwendig ist, ein Reduktionsmittel zuzufügen, welches das während der Reaktion gebildete Nickel(II) wieder zu Nickel(0) reduzieren kann. Als Reduktionsmittel eignen sich hier insbesondere unedle Metalle, beispielsweise Zink oder Mangan, oder anorganische Reduktionsmittel, wie z. B. Hydrazin. Der Zusatz einer Base ist nicht erforderlich.

Unter der Kupplung gemäß Hartwig-Buchwald wird die Kupplung eines primären oder sekundären Amins mit einem aromatischen oder heteroaromatischen Halogenid oder Sulfonat in Anwesenheit einer Base unter Übergangsmetall-Katalyse verstanden. Als Katalysator werden hier wiederum überwiegend Palladiumverbindungen gewählt, wie sie oben bereits ausgeführt sind. Durch die Wahl der Liganden kann gesteuert werden, ob die Reaktion bis zum sekundären oder tertiären Amin abläuft. Für die Bildung sekundärer Amine werden bevorzugt zweizähnige Arylphosphine als Liganden eingesetzt, insbesondere Bis(1,2-diphenylphosphino)ethan (dppe), Bis(1,3-diphenylphosphino)propan (dppp), Bis(1,1'-diphenylphosphino)ferrocen (dppf) oder 2,2'-Bis(diphenylphosphino)-1,1'-binaphthyl (BINAP). Für die Bildung tertiärer Amine werden bevorzugt elektronenreiche, sterisch anspruchsvolle Phosphine oder Halogenphosphine eingesetzt, beispielsweise Trialkylphosphine, insbesondere Tri-tert-butylphosphin, Dialkylhalogenphosphine, insbesondere Di-tert-butylchlorphosphin, Dialkoxyhalogenphosphine, Alkyldihalogenphosphine, insbesondere tert-Butyldichlorphosphin, und Alkoxydihalogenphosphine. Dabei wird die Reaktion im Allgemeinen wasserfrei in aromatischen Kohlenwasserstoffen, insbesondere Toluol oder Xylol, unter Zusatz einer starken Base, bevorzugt einem Alkalimetallalkoholat, insbesondere NaOtBu, geführt.

Unter der Kupplung gemäß Stille wird die Kupplung eines aromatischen oder heteroaromatischen Zinn-Derivats mit einem aromatischen oder heteroaromatischen Halogenid oder Sulfonat unter Übergangsmetall-Katalyse verstanden. Dabei ist das Zinn-Derivat bevorzugt eine Trialkylzinn-Gruppe, insbesondere eine Tributylzinn-oder eine Trimethylzinn-Gruppe. Als Katalysatoren werden vor allem die oben für die Suzuki-Kupplung ausgeführten Palladiumverbindungen und Liganden verwendet. Als Liganden eignen sich hier weiterhin auch besonders Triarylarsine und Trifurylphosphine. Der Zusatz einer Base ist für die Stille-Kupplung nicht erforderlich. Die Reaktion wird bevorzugt in einem aromatischen Kohlenwasserstoff, insbesondere Toluol oder Xylol, oder in einem dipolar aprotischen Lösemittel, insbesondere DMF, durchgeführt.

Unter der Kupplung gemäß Heck wird die Kupplung einer Verbindung mit vinylischem Wasserstoff mit einem aromatischen oder heteroaromatischen Halogenid oder Sulfonat in Anwesenheit einer Base unter Übergangsmetall-Katalyse verstanden. Dabei kommen als Katalysator die Palladiumvorstufen und Liganden in Frage, die oben bereits für die Suzuki-Kupplung erwähnt wurden. Als Katalysator haben sich auch Palladium-Nanopartikel, belegt mit Aminocarbonsäuren, bewährt, wie beispielsweise in WO 98/42644 beschrieben. Auch Carben-Komplexe wurden erfolgreich als Katalysotoren zur Heck-Kupplung eingesetzt. Der Zusatz stickstoffhaltiger Additive, insbesondere Aminocarbonsäuren, und metallhaltiger Additive, insbesondere Eisen bzw. Eisenverbindungen, kann sich hier sehr positiv auf die Ausbeute auswirken, wie beispielsweise in WO 02/10093 beschrieben. Als Base eignen sich insbesondere Amine und Alkalimetallcarbonate und -hydrogencarbonate. Als Lösemittel werden bevorzugt dipolar-aprotische Lösemittel und Alkohole verwendet.

Unter der Kupplung gemäß Sonogashira wird die Kupplung einer Verbindung mit acetylenischem Wasserstoff mit einem aromatischen oder heteroaromatischen Halogenid oder Sulfonat unter Übergangsmetall-Katalyse und gegebenenfalls unter Zusatz einer weiteren Metallverbindung, insbesondere einer Kupfer(I)verbindung, in Anwesenheit einer Base verstanden. Als Katalysatoren werden vor allem die oben für die Suzuki-Kupplung ausgeführten Pallädiumverbindüngen verwendet, wobei hier der Zusatz eines Kupfersalzes, insbesondere eines Kupfer(I)salzes, bevorzugt Kupfer(I)iodid, erforderlich ist. Als Base werden insbesondere aliphatische oder aromatische Amine zugesetzt.

Unter der Kupplung gemäß Negishi wird die Kupplung einer aromatischen oder vinylischen Zink-Verbindung mit einem aromatischen oder heteroaromatischen Halogenid oder Sulfonat unter Übergangsmetall-Katalyse, bevorzugt Palladium-Katalyse, in Anwesenheit einer Base verstanden.

Unter der Kupplung gemäß Hiyama wird die Kupplung einer aromatischen oder heteroaromatischen Silylverbindung, die noch mindestens ein Fluoratom an das Silicium gebunden trägt, mit einem aromatischen oder heteroaromatischen Halogenid oder Sulfonat unter Übergangsmetall-Katalyse, bevorzugt Palladium-Katalyse, in Anwesenheit einer Base verstanden.

Unter der Grignard-Kreuzkupplung (Kupplung gemäß Kumada) wird die Kupplung einer aromatischen, heteroaromatischen oder vinylischen Grignard-Verbindung mit einem aromatischen oder heteroaromatischen Halogenid oder Sulfonat unter Palladium-Katalyse in Anwesenheit einer Base verstanden.

Die gewählte Konzentration der Reaktionskomponenten hängt stark von der jeweiligen Reaktion, von der Struktur des jeweils erzeugten Polymers und vom gewünschten Molekulargewicht des Polymers ab. Dabei wird die Reaktion wegen der dabei auftretenden Viskositätserhöhung im Allgemeinen bei Konzentrationen im Bereich von weniger als 1 mol/l (bezogen auf die zu knüpfenden C-C- bzw. C-N-Bindungen) durchgeführt, bevorzugt bei Konzentrationen von weniger als 0.2 mol/l.

In einer weiteren Ausführungsform des erfindungsgemäßen Verfahrens werden 0.00001 bis 50 mol%, bevorzugt 0.0001 bis 10 mol%, besonders bevorzugt 0.001 bis 1 mol% des Katalysators, bezogen auf die Anzahl der zu bildenden C-C- bzw. C-N-Bindungen, eingesetzt.

Bei Reaktionen gemäß Schema 1 wird das Verhältnis der Monomeren bevorzugt so gewählt, dass die Abgangsgruppen X und Y in äquimolarem Verhältnis vorhanden sind. Dadurch lassen sich die höchsten Molekulargewichte erzielen. Jedoch kann auch eine der beiden Monomersorten in einem leichten Überschuss eingesetzt werden. Dies kann beispielsweise sinnvoll sein, um das Molekulargewicht des Polymers im gewünschten Bereich einzustellen.

Die Selektivität der Reaktion hängt außer von der Konzentration der eingesetzten Reagenzien von einer Reihe weiterer Parameter ab, wie z. B. der Temperatur, der Art der Austrittsgruppe, der Art des Katalysators oder der Verweilzeit. Dem Fachmann ist es möglich, die verschiedenen Parameter auf die jeweilige Reaktion und die jeweils eingesetzten Monomere so abzustimmen, dass das Polymer im gewünschten Molekulargewichtsbereich erhalten wird.

Eine weitere mögliche Ausführung für Reaktionen gemäß Schema 1 mit unterschiedlichen Gruppen X und Y (also alle der genannten Reaktionen außer die Kupplung gemäßYamamoto) ist deren Durchführung in mindestens zwei Stufen, wobei in der ersten Stufe ein Überschuss an einem der Monomeren eingesetzt wird, so dass ein Oligomer mit einer ersten Zusammensetzung gebildet wird, welches wenige (im Allgemeinen zwischen 3 und 20) Wiederholeinheiten besitzt. Darauf folgend werden in einer oder mehreren weiteren Stufe(n) die restlichen Monomere zugegeben, so dass schließlich das Verhältnis der beiden unterschiedlichen reaktiven Gruppen X und Y 1 : 1 beträgt. Bevorzugt ist die Monomerzusammensetzung der zweiten bzw. weiterer Stufen unterschiedlich zu derjenigen der ersten Stufe, wodurch Polymere entstehen, die eine blockartige Struktur aufweisen. Wie dies genau durchgeführt werden kann und welcher Aufbau dabei sinnvoll ist, ist beispielsweise in WO 05/014688 beschrieben. Dabei werden bevorzugt alle aufeinander folgenden Reaktionsschritte im kontinuierlichen Rohreaktor bzw. in aneinander gereihten Rohrreaktoren durchgeführt.

Bei einer Ausführungsform der Erfindung werden der Reaktionsmischung bereits zu Beginn der Reaktion außer den oben genannten Monomeren weitere monofunktionelle Verbindungen zugesetzt, die ein Kettenende bei der Polykondensation darstellen. Dies kann sinnvoll sein, um das Molekulargewicht des Polymers einzustellen und zu begrenzen.

Bei einer weiteren Ausführungsform der Erfindung enthält die Reaktionsmischung mindestens ein Monomer, das mindestens drei reaktive Gruppen X und/oder Y trägt und damit zu Verzweigungen der Polymerkette führt. Der sinnvolle Einsatz derartiger Monomere ist beispielsweise in DE 102004032527.8 beschrieben.

Es hat sich als bevorzugt herausgestellt, am Ende der Reaktion im selben Reaktionsschritt oder nach der Isolierung des Polymers in einem separaten Reaktionsschritt ein so genanntes Endcapping durchzuführen, d. h. monofunktionelle Verbindungen zuzugeben, die eventuelle reaktive Endgruppen der Polymere abfangen. Ebenso hat es sich als sinnvoll erwiesen, gegebenenfalls andere Nachbehandlungen vorzunehmen, um den Gehalt an bestimmten Verunreinigungen zu verringern, wie beispielsweise in EP 04023475.9 beschrieben. Bevorzugt wird das Endcapping bzw. die Nachbehandlung ebenfalls im kontinuierlichen Rohrreaktor durchgeführt.

Am Ende der Reaktion kann das Polymer durch gängige Reinigungsverfahren weiter gereinigt werden. Für die Verwendung in hochwertigen Anwendungen (z. B. polymeren Leuchtdioden) sollte in der Regel die Verunreinigung mit organischen (z. B. Oligomeren) und anorganischen Substanzen (z. B. Katalysatorreste, Basenreste) auf ein möglichst geringes Maß gebracht werden. Dies geschieht für den homogenen Katalysator bevorzugt durch Extraktion, gegebenenfalls mit Komplexbildnern, bevorzugt mit Cyanid oder Thiocarbamat, durch Ionenaustauscher oder andere Verfahren und kann gegebenenfalls auch bei erhöhter Temperatur durchgeführt werden. Für die Entfernung weiterer anorganischer Verunreinigungen eignet sich beispielsweise auch die Extraktion mit anorganischen Mineralsäuren. Besonders bevorzugt werden die Extraktionsschritte ebenfalls im kontinuierlichen Rohrreaktor durchgeführt. Die Phasentrennung kann dann beispielsweise in einem Entmischelement durchgeführt werden. Ein möglicher Aufbau für ein solches Entmischelement ist ein Kanal mit einer hydrophilen Wand, beispielsweise Glas, und einer hydrophoben Wand, beispielsweise Teflon. Derartige Extraktionsschritte können sinnvollerweise auch mehrfach hintereinander durch in Reihe geschaltete Misch- und Entmischelemente in einem oder mehreren Rohrreaktorsystemen durchgeführt werden.

Eine weitere Möglichkeit zur Reinigung ist der Einsatz eines an der Rohrreaktorwandung geträgerten lonentauschermaterials, gegebenenfalls in Kombination mit einem Verwirbler für einen besseren Kontakt mit der Wandung. Dies ist im kontinuierlichen Rohrreaktor deutlich effizienter einzusetzen als in Verfahren gemäß dem Stand der Technik, da durch das größere Verhältnis der Oberfläche zum Volumen ein deutlich besserer Kontakt zur Reaktorwandung gegeben ist.

Die Isolierung und das Ausfällen bzw. Umfällen der Polymere wird vorzugsweise batchweise außerhalb des Rohrreaktors durchgeführt.

Das erfindungsgemäße Verfahren bietet die folgenden Vorteile gegenüber Verfahren gemäß dem Stand der Technik:
1. Bei dem erfindungsgemäßen Verfahren ist die Gefahr für Mensch und Umwelt durch austretende Chemikalien erheblich verringert und führt somit zu einer erhöhten Sicherheit beim Umgang mit Gefahrstoffen und Lösemitteln.
2. Die Kupplung von organischen Verbindungen nach dem erfindungsgemäßen Verfahren ermöglicht eine bessere Kontrolle der Reaktionsbedingungen, wie z. B. Reaktionsdauer und Reaktionstemperatur, als dies in herkömmlichen Verfahren möglich ist. Dadurch ist der Reaktionsverlauf der Kupplungsreaktion bei dem Reaktionsdauer und Reaktionstemperatur, als dies in herkömmlichen Verfahren möglich ist. Dadurch ist der Reaktionsverlauf der Kupplungsreaktion bei dem erfindungsgemäßen Verfahren sehr schnell und genau regelbar. Die Polymere lassen sich so im gewünschten Molekulargewichtsbereich erhalten, wobei die Reproduzierbarkeit gegenüber dem Stand der Technik deutlich verbessert ist.
3. Besonders vorteilhaft ist weiterhin, dass das erfindungsgemäße Verfahren kontinuierlich geführt werden kann. Hierdurch ist es im Vergleich zu herkömmlichen Verfahren schneller und kostengünstiger, beliebige Mengen der gewünschten Polymere im gewünschten Molekulargewichtsbereich herzustellen.
4. Die Reinigung der Polymere ist deutlich effizienter als durch Verfahren gemäß dem Stand der Technik. Da die Reinheit der Polymere eine ganz entscheidende Rolle für die Funktion in organischen elektronischen Vorrichtungen spielt, ist dies ein erheblicher Vorteil gegenüber Verfahren gemäß dem Stand der Technik.

Besonders überraschend und unerwartet ist jedoch, dass die Reaktionsführung dieser Polykondensationen im kontinuierlichen Rohrreaktor gelingt, insbesondere auch zur Synthese vollständig konjugierter Polyarylene, deren steife Struktur und hohe Lösungsviskosität Probleme beim Lösungstransport in den engen Kanälen des Rohrreaktors nahe gelegt hätten. Dieses Vorurteil wurde auch durch den Stand der Technik nahe gelegt, da dort bereits übergangsmetallkatalysierte Kupplungsreaktionen im Mikroreaktor beschrieben wurden, nicht jedoch deren Anwendung auf entsprechende Polykondensationen, so dass dies die Vermutung aufkommen ließ, dass derartige Polykondensationen technisch nicht zu verwirklichen seien.

### Beispiele:

Es wurden Polymere aus den unten abgebildeten Monomeren **M1, M2** und **M3** nach dem Suzuki-Verfahren synthetisiert. Dazu wurde entweder ein Rohrreaktor mit einem Durchmesser von 1 mm und einer Länge von 500 mm verwendet (Beispiele 1 und 2) oder ein Batchreaktor (Glaskolben, Beispiele 3 und 4, Referenz gemäß Stand der Technik). Als Lösemittel wurde jeweils eine Mischung aus Toluol, Dioxan und Wasser (2 : 2 : 1) verwendet, als Base Kaliumphosphat-Hydrat und als Katalysator Pd(OAc)₂ und P(o-Tolyl)₃. Die genause Zusammensetzung der Polymere und die Reaktionsergebnisse sind in Tabelle 1 zusammengefasst.

Wie man an den Ergebnissen sieht, ist die Polydispersität (PD) der erfindungsgemäßen Polymere, die im kontinuierlichen Rohrreaktor synthetisiert wurden, kleiner als die der Referenzpolymere gemäß dem Stand der Technik. Weiterhin zeigen die erfindungsgemäßen Polymere bessere Eigenschaften in der Elektrolumineszenz (höhere Effizienz, niedrigere Spannung, längere Lebensdauer) als die Polymere gemäß dem Stand der Technik. Die Polymere, die nach der erfindungsgemäßen Verfahren synthetisiert wurden, sind daher besser für den Einsatz in organischen Leuchtdioden geeignet als Polymere, die nach Batchverfahren gemäß dem Stand der Technik synthetisiert wurden.

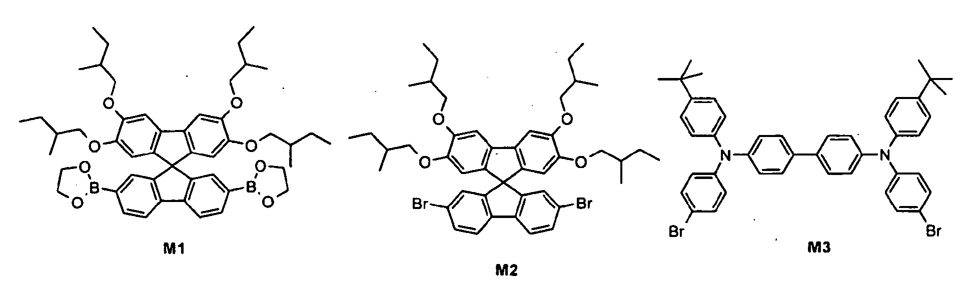

**Tabelle 1**

| | | **Reaktor** | | | | **Anteil der Monomere in der Polymerisation [mol%]** | | | **GPC^{a}** | | | **Elektrolumineszenz** | | |
|---|---|---|---|---|---|---|---|---|---|---|---|---|---|---|
| Bsp | Polymer | Durch-messer | Länge | Durchfluss-geschw. | Verweilzeit [min] | **M1** | **M2** | **M3** | Mw | Mn | PD | Max. Eff.^{b} [cd/A] | U^{c} | Lebensdauer^{d} |
| 1 | P1 | 1 mm | 500 mm | 200 µl/min | 8 | 50 | 50 | | 280 | 120 | 2,33 | 2,8 | 4,1 | 400 |
| 2 | P2 | 1 mm | 500 mm | 180 µl/min | 9 | 50 | 40 | 10 | 240 | 110 | 2,18 | 4,8 | 3,9 | 2000 |
| 3 | Ref. | Batchreaktor | | | 38 | 50 | 50 | | 355 | 130 | 2,73 | 2,0 | 4,5 | n.d. |
| 4 | Ref. | Batchreaktor | | | 42 | 50 | 40 | 10 | 460 | 150 | 3,07 | 3,6 | 4,2 | 900 |

| | | | | | | | | | | | | | | |
|---|---|---|---|---|---|---|---|---|---|---|---|---|---|---|
| ^{a}GPC Messungen: THF; 1 ml/min, Plgel 10µm Mixed-B 2 x 300 x 7.5 mm², 35°C, RI Detektion wurde gegen Polystyrol geeicht; Angabe in kDa. ^{b}Max. Eff.: Maximale Effizienz, gemessen in cd/A. ^{c}Spannung bei einer Helligkeit von 100 cd/m². ^{d}Lebensdauer: Zeit bis zum Abfall der Helligkeit auf 50 % der Anfangshelligkeit (extrapoliert auf eine Anfangshelligkeit von 100 cd/m²). | | | | | | | | | | | | | | |

## Patentansprüche

1. Verfahren zur Herstellung von Polymeren oder Oligomeren durch Polykondensation, wobei die Polykondensation durch C-C- bzw. C-N-Kupplungsreaktionen unter Übergangsmetallkatalyse in einem Lösemittel oder Lösemittelgemisch gegebenenfalls unter Zusatz mindestens einer Base und/oder mindestens eines Additivs erfolgt und wobei die übergangsmetallkatalysierte Kupplungsreaktion ausgewählt ist aus der Gruppe der Suzuki-Kupplungen, der Yamamoto-Kupplungen, der Hartwig-Buchwald-Kupplungen, der Stille-Kupplungen, der Heck-Kupplungen, der Sonogashira-Kupplungen, der Negishi-Kupplungen, der Hiyama-Kupplungen und der Grignard-Kreuzkupplungen, **dadurch gekennzeichnet, dass** die Reaktion in einem kontinuierlichen Rohrreaktor durchgeführt wird.

2. Verfahren gemäß Anspruch 1, **dadurch gekennzeichnet, dass** der Rohrreaktor ein Volumen ≤ 20 ml aufweist.

3. Verfahren gemäß Anspruch 1 und/oder 2, **dadurch gekennzeichnet, dass** die Kanäle des kontinuierlichen Rohrreaktors einen Durchmesser von 10 µm bis 20 mm aufweisen.

4. Verfahren gemäß einem oder mehreren der Ansprüche 1 bis 3, **dadurch gekennzeichnet, dass** die Lösungen so in den Rohrreaktor gepumpt werden, dass sie diesen mit einer Durchflussgeschwindigkeit von 0.01 µl/min bis 100 ml/min durchströmen.

5. Verfahren gemäß einem oder mehreren der Ansprüche 1 bis 4, **dadurch gekennzeichnet, dass** das Reaktionsgemisch durch zwei oder mehr in Reihe geschaltete kontinuierliche Rohrreaktoren geführt wird.

6. Verfahren gemäß einem oder mehreren der Ansprüche 1 bis 5, **dadurch gekennzeichnet, dass** das Reaktionsgemisch durch zwei oder mehr parallel angeordnete kontinuierliche Rohrreaktoren geleitet wird.

7. Verfahren gemäß einem oder mehreren der Ansprüche 1 bis 6, **dadurch gekennzeichnet, dass** die Verweilzeit der Reaktionslösung im Rohrreaktor ≤ 2 Stunden beträgt.

8. Verfahren gemäß einem oder mehreren der Ansprüche 1 bis 7, **dadurch gekennzeichnet, dass** es bei einer Temperatur von -80 bis +250 °C durchgeführt wird.

9. Verfahren gemäß einem oder mehreren der Ansprüche 1 bis 8, **dadurch gekennzeichnet, dass** der Reaktionsverlauf durch Viskosimetrie verfolgt und gesteuert wird.

10. Verfahren gemäß einem oder mehreren der Ansprüche 1 bis 9, **dadurch gekennzeichnet, dass** das Übergangsmetall bzw. die Übergangsmetallverbindung ausgewählt ist aus Palladium bzw. Palladiumverbindungen, Nickel bzw. Nickelverbindungen, Cobalt bzw. Cobaltverbindungen oder Eisen bzw. Eisenverbindungen.

11. Verfahren gemäß einem oder mehreren der Ansprüche 1 bis 10, **dadurch gekennzeichnet, dass** der kontinuierliche Rohrreaktor ein Mikroreaktor ist.

12. Verfahren gemäß einem oder mehreren der Ansprüche 1 bis 11, **dadurch gekennzeichnet, dass** die Polykondensationsreaktion der in Schema 1 oder Schema 2 dargestellten Reaktion folgt:
n X-Ar-X + n Y-M-Y → ---[Ar-M]ₙ--- + X-Y (Schema 1)
n X-Ar-(M)ₘ-Y → ---[Ar-(M)ₘ]ₙ--- (Schema 2)
wobei die verwendeten Symbole und Indizes die folgende Bedeutung haben:
X ist bei jedem Auftreten gleich oder verschieden Chlor, Brom, Iod, Fluoralkylsulfonat oder Perfluoralkylsulfonat;
Y ist bei jedem Auftreten gleich oder verschieden X oder B(OH)₂, B(OR)₂, BR₂, SnR₃, NR-H, NH₂, MgCl, MgBr, Mgl, SiR₂F, SiRF₂, ZnCl, ZnBr, Znl oder auch H, falls dieses direkt an eine vinylische oder acetylenische Bindung von M gebunden ist;
Ar ist bei jedem Auftreten gleich oder verschiedenen ein bivalentes aromatisches oder heteroaromatisches Ringsystem mit 5 bis 60 aromatischen Ringatomen, welches auch durch einen oder mehrere Reste R oder OR substituiert sein kann;
M ist bei jedem Auftreten gleich oder verschieden eine Gruppe Ar, oder M ist gleich oder verschieden eine organische Gruppe mit 1 bis 60 C-Atomen, bevorzugt eine Gruppe Ar, die durch eine oder mehrere Vinyl- oder Acetylengruppen substituiert ist;
R ist bei jedem Auftreten gleich oder verschieden H, eine geradkettige Alkylkette mit 1 bis 40 C-Atomen oder eine verzweigte oder cyclische Alkylkette mit 3 bis 40 C-Atomen, in der auch ein oder mehrere nicht benachbarte C-Atome durch N-R¹, O, S, O-CO-O, CO-O, -CR¹=CR¹-, -C≡C- ersetzt sein können und in der auch ein oder mehrere H-Atome durch F, Cl, Br, I oder CN ersetzt sein können, oder ein aromatisches oder heteroaromatisches Ringsystem mit 5 bis 60 aromatischen Ringatomen, welches auch durch einen oder mehrere nicht-aromatische Reste R substituiert sein kann; dabei können auch zwei oder mehrere der Reste R miteinander ein Ringsystem bilden;
R¹ ist bei jedem Auftreten gleich oder verschieden H oder ein aliphatischer oder aromatischer Kohlenwasserstoffrest mit 1 bis 20 C-Atomen;
n ist bei jedem Auftreten eine Zahl zwischen 10 und 10000;
m ist bei jedem Auftreten 0 oder 1;
die gestrichelte Bindung bedeutet dabei die Verknüpfung in die Polymerkette.

13. Verfahren gemäß Anspruch 12, **dadurch gekennzeichnet, dass** bei einer Reaktion alle Gruppen X gleich gewählt sind und alle Gruppen Y gleich gewählt sind.

14. Verfahren gemäß einem oder mehreren der Ansprüche 1 bis 13, **dadurch gekennzeichnet, dass** als Katalysator bzw. Katalysatorvorstufe wenigstens eine Verbindung eingesetzt wird, die Palladium in der Oxidationsstufe 0 enthält, bevorzugt Tetrakis(triarylphosphin)palladium(0) oder Tris(dibenzylidenaceton)dipalladium(0).

15. Verfahren gemäß einem oder mehreren der Ansprüche 1 bis 13, **dadurch gekennzeichnet, dass** als Katalysator bzw. Katalysatorvorstufe wenigstens eine Verbindung, die Palladium in der Oxidationsstufe +II enthält, gegebenenfalls in Gegenwart wenigstens eines Liganden eingesetzt wird, bevorzugt Palladium(II)halogenide, Palladium(II)carboxylate, Dichlor-bis(triphenylphosphin)palladium(II), Palladium(II)-β-ketoketonate, Nitrilpalladium(II)hafogenide, Allylpalladiumhalogenide, Olefinpalladiumhalogenide oder ein Gemisch aus wenigstens zwei dieser Verbindungen.

16. Verfahren gemäß Anspruch 15, **dadurch gekennzeichnet, dass** zusätzliche Liganden zugesetzt werden, ausgewählt aus der Gruppe der Triarylphosphine, Triheteroarylphosphine, Diarylalkylphosphine, Diheteroarylalkylphosphine, Aryldialkylphosphine, Heteroaryldialkylphosphine oder Trialkylphosphine, wobei die Substituenten am Phosphor gleich oder verschieden, chiral oder achiral sein können, wobei ein oder mehrere der Substituenten die Phosphorgruppen mehrerer Phosphine verknüpfen können und wobei diese Verknüpfungen auch über ein oder mehrere Metallatome erfolgen können; der Halogenphosphine, Dihalogenphosphine, Alkoxyphosphine, Aryloxyphosphine, Heteroaryloxyphosphine, Dialkoxyphosphine, Diaryloxyphosphine oder Diheteroaryloxyphosphine verwendet werden.

17. Verfahren gemäß einem oder mehreren der Ansprüche 1 bis 13, **dadurch gekennzeichnet, dass** heterogene bzw. immobilisierte Palladiumkatalysatoren eingesetzt werden.

18. Verfahren gemäß einem oder mehreren der Ansprüche 1 bis 13, **dadurch gekennzeichnet, dass** Nickel bzw. Nickelverbindungen als Katalysator eingesetzt werden.

19. Verfahren gemäß Anspruch 18, **dadurch gekennzeichnet, dass** elementares Nickel bzw. auch disperses oder kolloidales metallisches Nickel, geträgert oder ungeträgert, Nickelschwamm, Nickel auf Kieselgur, Nickel auf Aluminiumoxid, Nickel auf Silica, Nickel auf Kohle, Nickel(II)carboxylate, Nickel(II)ketoketonate, Nickel(II)halogenide, Nickel(II)carbonat, Nickel(II)nitrat, Nickel(II)Bulfat, Olefinnickel(II)halogenide, Allylnickel(II)halogenide, Additionsverbindungen des Typs NiL₂(Hal)₂, wobei Hal Chlor, Brom, Iod und L einem neutralen Liganden, entspricht, Bis(cyclooctadien)nickel(0), Tetrakis(triphenylphosphin)nickel(0) oder weitere Nickel(0)verbindungen als Katalysator verwendet werden.

20. Verfahren gemäß einem oder mehreren der Ansprüche 1 bis 19, **dadurch gekennzeichnet, dass** eine Base zugesetzt wird.

21. Verfahren gemäß Anspruch 20, **dadurch gekennzeichnet, dass** die Base ausgewählt ist aus Alkali- und Erdalkalimetallhydroxiden, -oxiden, -carboxylaten, -carbonaten, -hydrogencarbonaten, -phosphaten, -hydrogenphosphaten und -fluoriden, Metallalkoholaten, organischen Hydroxiden, organischen Aminen oder ein Stickstoff-haltigen, gegebenenfalls aromatischen Heterocyclen oder auch Mischungen dieser Basen.

22. Verfahren gemäß einem oder mehreren der Ansprüche 1 bis 21, **dadurch gekennzeichnet, dass** das Lösemittel ausgewählt ist aus der Gruppe der aromatischen Lösemittel, geradkettigen, verzweigten oder cyclischen Ether, N-haltigen heterocyclischen Lösemittel, Alkohole, dipolar aprotischen Lösemittel, organischen Ester, Nitrile, Sulfoxide, organischen Amide, organischen Carbonate, halogenierten Lösemittel oder geradkettigen, verzweigten oder cyclischen Kohlenwasserstoffe, oder ein Gemisch aus wenigstens zwei der vorstehend genannten Lösemittel ist.

23. Verfahren gemäß einem oder mehreren der Ansprüche 1 bis 22, **dadurch gekennzeichnet, dass** die Reaktion unter Zusatz von Wasser durchgeführt wird.

24. Verfahren gemäß einem oder mehreren der Ansprüche 1 bis 23, **dadurch gekennzeichnet, dass** 0.00001 bis 50 mol% des Katalysators, bezogen auf die Anzahl der zu bildenden C-C- bzw. C-N-Bindungen, eingesetzt werden.

25. Verfahren gemäß einem oder mehreren der Ansprüche 1 bis 24, **dadurch gekennzeichnet, dass** die Reinigung durch Extraktion, gegebenenfalls mit Komplexbildnern, durch Ionenaustauscher, die gegebenenfalls an die Reaktorwandung gebunden sind, oder durch Extraktion mit anorganischen Mineralsäuren und gegebenenfalls bei erhöhter Temperatur durchgeführt wird.

26. Verfahren gemäß Anspruch 25, **dadurch gekennzeichnet, dass** die Reinigung in einem oder mehreren Misch- und Entmischschritten im kontinuierlichen Rohrreaktor erfolgt.

## Claims

1. Process for the preparation of polymers or oligomers by polycondensation, where the polycondensation is carried out by means of C-C or C-N coupling reactions with transition-metal catalysis in a solvent or solvent mixture, optionally with addition of at least one base and/or at least one additive, and where the transition metal-catalysed coupling reaction is selected from the group of the Suzuki couplings, the Yamamoto couplings, the Hartwig-Buchwald couplings, the Stille couplings, the Heck couplings, the Sonogashira couplings, the Negishi couplings, the Hiyama couplings and the Grignard cross-couplings, **characterised in that** the reaction is carried out in a continuous tubular reactor.

2. Process according to Claim 1, **characterised in that** the tubular reactor has a volume ≤ 20 ml.

3. Process according to Claim 1 and/or 2, **characterised in that** the channels of the continuous tubular reactor have a diameter of 10 µm to 20 mm.

4. Process according to one or more of Claims 1 to 3, **characterised in that** the solutions are pumped into the tubular reactor in such a way that they flow through it at a flow rate of 0.01 µl/min to 100 ml/min.

5. Process according to one or more of Claims 1 to 4, **characterised in that** the reaction mixture is passed through two or more continuous tubular reactors connected in series.

6. Process according to one or more of Claims 1 to 5, **characterised in that** the reaction mixture is passed through two or more continuous tubular reactors arranged in parallel.

7. Process according to one or more of Claims 1 to 6, **characterised in that** the residence time of the reaction solution in the tubular reactor is ≤ 2 hours.

8. Process according to one or more of Claims 1 to 7, **characterised in that** it is carried out at a temperature of -80 to +250°C.

9. Process according to one or more of Claims 1 to 8, **characterised in that** the course of the reaction is monitored and controlled by viscometry.

10. Process according to one or more of Claims 1 to 9, **characterised in that** the transition metal or the transition-metal compound is selected from palladium or palladium compounds, nickel or nickel compounds, cobalt or cobalt compounds or iron or iron compounds.

11. Process according to one or more of Claims 1 to 10, **characterised in that** the continuous tubular reactor is a microreactor.

12. Process according to one or more of Claims 1 to 11, **characterised in that** the polycondensation reaction follows the reaction shown in Scheme 1 or Scheme 2:
nX-Ar-X + n Y-M-Y → ---[Ar-M]ₙ--- + X-Y (Scheme 1)
n X-Ar-(M)ₘ-Y → ---[Ar-(M)ₘ]ₙ--- (Scheme 2)
where the symbols and indices used have the following meanings:
X is on each occurrence, identically or differently, chlorine, bromine, iodine, fluoroalkylsulfonate or perfluoroalkylsulfonate;
Y is on each occurrence, identically or differently, X or B(OH)₂, B(OR)₂, BR₂, SnR₃, NR-H, NH₂, MgCl, MgBr, Mgl, SiR₂F, SiRF₂, ZnCl, ZnBr, Znl or also H if this is bonded directly to a vinylic or acetylenic bond of M;
Ar is on each occurrence, identically or differently, a divalent aromatic or heteroaromatic ring system having 5 to 60 aromatic ring atoms, which may also be substituted by one or more radicals R or OR;
M is on each occurrence, identically or differently, a group Ar, or M is, identi- cally or differently, an organic group having 1 to 60 C atoms, preferably a group Ar which is substituted by one or more vinyl or acetylene groups;
R is on each occurrence, identically or differently, H, a straight-chain alkyl chain having 1 to 40 C atoms or a branched or cyclic alkyl chain having 3 to 40 C atoms, in which, in addition, one or more non-adjacent C atoms may be replaced by N-R¹, O, S, O-CO-O, CO-O, -CR¹=CR¹ -C≡C- and in which, in addition, one or more H atoms may be replaced by F, Cl, Br, I or CN, or an aromatic or heteroaromatic ring system having 5 to 60 aromatic ring atoms, which may also be substituted by one or more non-aromatic radicals R; two or more of the radicals R here may also form a ring system with one another;
R¹ is on each occurrence, identically or differently, H or an aliphatic or aromatic hydrocarbon radical having 1 to 20 C atoms;
n is on each occurrence a number between 10 and 10000;
m is on each occurrence 0 or 1;
the dashed bond here denotes the link into the polymer chain.

13. Process according to Claim 12, **characterised in that**, in a reaction, all groups X are selected identically and all groups Y are selected identically.

14. Process according to one or more of Claims 1 to 13, **characterised in that** the catalyst or catalyst precursor employed is at least one compound which contains palladium in the oxidation state 0, preferably tetrakis(triarylphosphine)palladium(0) or tris(dibenzylideneacetone)dipalladium(0).

15. Process according to one or more of Claims 1 to 13, **characterised in that** the catalyst or catalyst precursor employed is at least one compound which contains palladium in the oxidation state +II, optionally in the presence of at least one ligand, preferably palladium(II) halides, palladium(II) carboxylates, dichlorobis-(triphenylphosphine)palladium(II), palladium(II) β-ketoketonates, nitrilepalladium(II) halides, allylpalladium halides, olefinpalladium halides or a mixture of at least two of these compounds.

16. Process according to Claim 15, **characterised in that** additional ligands selected from the group of the triarylphosphines, triheteroarylphosphines, diarylalkylphosphines, diheteroarylalkylphosphines, aryldialkylphosphines, heteroaryldialkylphosphines or trialkylphosphines, where the substituents on the phosphorus may be identical or different, chiral or achiral, where one or more of the substituents are able to link the phosphorus groups of a plurality of phosphines and where these links can also take place via one or more metal atoms; the halophosphines, dihalophosphines, alkoxyphosphines, aryloxyphosphines, heteroaryloxyphosphines, dialkoxyphosphines, diaryloxyphosphines or diheteroaryloxyphosphines are added.

17. Process according to one or more of Claims 1 to 13, **characterised in that** heterogeneous or immobilised palladium catalysts are employed.

18. Process according to one or more of Claims 1 to 13, **characterised in that** nickel or nickel compounds are employed as catalyst.

19. Process according to Claim 18, **characterised in that** elemental nickel or also disperse or colloidal metallic nickel, supported or unsupported, nickel sponge, nickel on kieselguhr, nickel on aluminium oxide, nickel on silica, nickel on carbon, nickel(II) carboxylates, nickel(II) ketoketonates, nickel(II) halides, nickel(II) carbonate, nickel(II) nitrate, nickel(II) sulfate, olefinnickel(II) halides, allylnickel(II) halides, addition compounds of the NiL₂(Hal)₂ type, where Hal corresponds to chlorine, bromine, iodine and L corresponds to a neutral ligand, bis(cyclooctadiene)nickel(0), tetrakis(triphenylphosphine)nickel(0) or further nickel(0) compounds are used as catalyst.

20. Process according to one or more of Claims 1 to 19, **characterised in that** a base is added.

21. Process according to Claim 20, **characterised in that** the base is selected from alkali metal and alkaline-earth metal hydroxides, oxides, carboxylates, carbonates, hydrogencarbonates, phosphates, hydrogenphosphates and fluorides, metal alcoholates, organic hydroxides, organic amines or nitrogen-containing, optionally aromatic heterocycles or also mixtures of these bases.

22. Process according to one or more of Claims 1 to 21, **characterised in that** the solvent is selected from the group of the aromatic solvents, straight-chain, branched or cyclic ethers, N-containing heterocyclic solvents, alcohols, dipolar aprotic solvents, organic esters, nitriles, sulfoxides, organic amides, organic carbonates, halogenated solvents or straight-chain, branched or cyclic hydrocarbons, or a mixture of at least two of the above-mentioned solvents.

23. Process according to one or more of Claims 1 to 22, **characterised in that** the reaction is carried out with addition of water.

24. Process according to one or more of Claims 1 to 23, **characterised in that** 0.00001 to 50 mol% of the catalyst, based on the number of C-C or C-N bonds to be formed, are employed.

25. Process according to one or more of Claims 1 to 24, **characterised in that** the purification is carried out by extraction, optionally with complexing agents, by means of ion exchangers, which are optionally bonded to the reactor wall, or by extraction with inorganic mineral acids and optionally at elevated temperature.

26. Process according to Claim 25, **characterised in that** the purification is carried out in one or more mixing and separation steps in the continuous tubular reactor.

## Revendications

1. Procédé de préparation de polymères ou d'oligomères par polycondensation, où la polycondensation est réalisée au moyen de réactions de couplage de C-C ou C-N à catalyse par métal de transition dans un solvant ou un mélange de solvants, éventuellement avec l'addition d'au moins une base et/ou d'au moins un additif, et où la réaction de couplage à catalyse par métal de transition est choisie parmi le groupe constitué par les couplages de Suzuki, les couplages de Yamamoto, les couplages de Hartwig-Buchwald, les couplages de Stille, les couplages de Heck, les couplages de Sonogashira, les couplages de Negishi, les couplages de Hiyama et les couplages croisés de Grignard, **caractérisé en ce que** la réaction est réalisée dans un réacteur tubulaire continu.

2. Procédé selon la revendication 1, **caractérisé en ce que** le réacteur tubulaire a un volume ≤ 20 ml.

3. Procédé selon la revendication 1 et/ou 2, **caractérisé en ce que** les canaux du réacteur tubulaire continu ont un diamètre allant de 10 µm à 20 mm.

4. Procédé selon l'une ou plusieurs parmi les revendications 1 à 3, **caractérisé en ce que** les solutions sont pompées dans le réacteur tubulaire de façon à ce qu'elles y circulent à un débit allant de 0,01 µl/min à 100 ml/min.

5. Procédé selon l'une ou plusieurs parmi les revendications 1 à 4, **caractérisé en ce que** l'on fait passer le mélange réactionnel à travers deux réacteurs tubulaires continus, ou plus, reliés en série.

6. Procédé selon l'une ou plusieurs parmi les revendications 1 à 5, **caractérisé en ce que** l'on fait passer le mélange réactionnel à travers deux réacteurs tubulaires continus, ou plus, disposés en parallèle.

7. Procédé selon l'une ou plusieurs parmi les revendications 1 à 6, **caractérisé en ce que** le temps de séjour de la solution réactionnelle dans le réacteur tubulaire est ≤ 2 heures.

8. Procédé selon l'une ou plusieurs parmi les revendications 1 à 7, **caractérisé en ce qu'**il est réalisée à une température allant de -80 à +250°C.

9. Procédé selon l'une ou plusieurs parmi les revendications 1 à 8, **caractérisé en ce que** le déroulement de la réaction est suivi et contrôlé par viscosimétrie.

10. Procédé selon l'une ou plusieurs parmi les revendications 1 à 9, **caractérisé en ce que** le métal de transition ou le composé de métal de transition est choisi parmi le palladium ou les composés de palladium, le nickel ou les composés de nickel, le cobalt ou les composés de cobalt ou le fer ou les composés de fer.

11. Procédé selon l'une ou plusieurs parmi les revendications 1 à 10, **caractérisé en ce que** le réacteur tubulaire continu est un microréacteur.

12. Procédé selon l'une ou plusieurs parmi les revendications 1 à 11, **caractérisé en ce que** la réaction de polycondensation suit la réaction illustrée dans le Schéma 1 ou le Schéma 2:
n X-Ar-X + n Y-M-Y → ---[Ar-M]ₙ--- + X-Y (Schéma 1)
n X-Ar-(M)ₘ-Y → ---[Ar-(M)ₘ]ₙ--- (Schéma 2)
où les symboles et indices utilisés ont les significations suivantes :
X est à chaque occurrence, de manière identique ou différente, chlore, brome, iode, fluoroalkylsulfonate ou perfluoroalkylsulfonate ;
Y est à chaque occurrence, de manière identique ou différente, X ou B(OH)₂, B(OR)₂, BR₂, SnR₃, NR-H, NH₂, MgCl, MgBr, Mgl, SiR₂F, SiRF₂, ZₙCl, ZnBr, Znl ou également H si celui-ci est lié directement à une liaison vinylique ou acétylénique de M ;
Ar est à chaque occurrence, de manière identique ou différente, un noyau aromatique ou hétéroaromatique divalent ayant de 5 à 60 atomes de cycle aromatique, qui peut également être substitué par un ou plusieurs radicaux R ou OR ;
M est à chaque occurrence, de manière identique ou différente, un groupement Ar, ou M est, de manière identique ou différente, un groupement organique ayant de 1 à 60 atomes de C, préférablement un groupement Ar qui est substitué par un ou plusieurs groupements vinyle ou acétylène ;
R est à chaque occurrence, de manière identique ou différente, H, une chaîne alkyle linéaire ayant de 1 à 40 atomes de C ou une chaîne alkyle ramifiée ou cyclique ayant de 3 à 40 atomes de C, dans laquelle, de plus, un ou plu- sieurs atomes de C non adjacents peuvent être remplacés par N-R¹, O, S, O-CO-O, CO-O, -CR¹=CR¹ -C=C- et dans laquelle, de plus, un ou plusieurs atomes de H peuvent être remplacés par F, Cl, Br, I ou CN, ou un noyau aromatique ou hétéroaromatique ayant de 5 à 60 atomes de cycle aromati- que, qui peut également être substitué par un ou plusieurs radicaux R non aromatiques ; deux radicaux R, ou plus, pouvant également ici former un noyau les uns avec les autres ;
R¹ est à chaque occurrence, de manière identique ou différente, H ou un radical hydrocarboné aliphatique ou aromatique ayant de 1 à 20 atomes de C ;
n est à chaque occurrence un nombre compris entre 10 et 10000 ;
m est à chaque occurrence 0 ou 1 ;
la liaison en pointillés désignant ici le lien dans la chaîne du polymère.

13. Procédé selon la revendication 12, **caractérisé en ce que**, dans une réaction, tous les groupements X sont choisis de manière identique et tous les groupements Y sont choisis de manière identique.

14. Procédé selon l'une ou plusieurs parmi les revendications 1 à 13, **caractérisé en ce que** le catalyseur ou précurseur du catalyseur employé est au moins un composé qui contient du palladium à l'état d'oxydation 0, préférablement le tétrakis(triarylphosphine)palladium(0) ou le tris(dibenzylidèneacétone)dipalladium(0).

15. Procédé selon l'une ou plusieurs parmi les revendications 1 à 13, **caractérisé en ce que** le catalyseur ou précurseur du catalyseur employé est au moins un composé qui contient du palladium à l'état d'oxydation +II, éventuellement en présence d'au moins un ligand, préférablement les halogénures de palladium(II), les carboxylates de palladium(II), le dichlorobis(triphénylphosphine)palladium(II), les β-cétocétonates de palladium(II), les halogénures de nitrilepalladium(II), les halogénures d'allylpalladium, les halogénures d'oléfinpalladium ou un mélange d'au moins deux de ces composés.

16. Procédé selon la revendication 15, **caractérisé en ce** des ligands supplémentaires choisis parmi le groupe constitué par les triarylphosphines, trihétéroarylphosphines, les diarylalkylphosphines, les dihétéroarylalkylphosphines, les aryldialkylphosphines, les hétéroaryldialkylphosphines ou les trialkylphosphines, où les substituants sur le phosphore peuvent être identiques ou différents, chiraux ou achiraux, où un ou plusieurs parmi les substituants sont capables de relier les groupements phosphore d'une pluralité de phosphines et où ces liens peuvent également se produire par l'intermédiaire d'un ou plusieurs atomes métalliques ; les halogénophosphines, les dihalogénophosphines, les alcoxyphosphines, les aryloxyphosphines, les hétéroaryloxyphosphines, les dialcoxyphosphines, les diaryloxyphosphines ou les dihétéroaryloxyphosphines, sont ajoutés.

17. Procédé selon l'une ou plusieurs parmi les revendications 1 à 13, **caractérisé en ce que** l'on utilise des catalyseurs au palladium immobilisés ou hétérogènes.

18. Procédé selon l'une ou plusieurs parmi les revendications 1 à 13, **caractérisé en ce que** du nickel ou des composés de nickel sont employés comme catalyseur.

19. Procédé selon la revendication 18, **caractérisé en ce que** du nickel élémentaire ou également du nickel métallique colloïdal ou dispersé, sur support ou non, de l'éponge de nickel, du nickel sur kieselguhr, du nickel sur oxyde d'aluminium, du nickel sur silice, du nickel sur carbone, des carboxylates de nickel(II), des cétocétonates de nickel(II), des halogénures de nickel(II), du carbonate de nickel(II), du nitrate de nickel(II), du sulfate de nickel(II), des halogénures d'oléfinenickel(II), des halogénures d'allylnickel(II), des composés d'addition de type NiL₂(Hal)₂, où Hal correspond à chlore, brome, iode et L correspond à un ligand neutre, du bis(cyclooctadiène)nickel(0), du tétrakis(triphénylphosphine)-nickel(0) ou d'autres composés de nickel(0) sont utilisés comme catalyseur.

20. Procédé selon l'une ou plusieurs parmi les revendications 1 à 19, **caractérisé en ce que** l'on ajoute une base.

21. Procédé selon la revendication 20, **caractérisé en ce que** la base est choisie parmi les hydroxydes, oxydes, carboxylates, carbonates, hydrogénocarbonates, phosphates, hydrogénophosphates et fluorures de métaux alcalins et de métaux alcalino-terreux, les alcoolates de métal, les hydroxydes organiques, les amines organiques ou les hétérocycles azotés, éventuellement aromatiques ou également des mélanges de ces bases.

22. Procédé selon l'une ou plusieurs parmi les revendications 1 à 21, **caractérisé en ce que** le solvant est choisi parmi le groupe constitué par les solvants aromatiques, les éthers à chaîne linéaire, ramifiée ou cyclique, les solvants hétérocycliques azotés, les alcools, les solvants aprotiques dipolaires, les esters organiques, les nitriles, les sulfoxydes, les amides organiques, les carbonates organiques, les solvants halogénés ou les hydrocarbures à chaîne linéaire, ramifiée ou cyclique, ou un mélange d'au moins deux parmi les solvants susmentionnés.

23. Procédé selon l'une ou plusieurs parmi les revendications 1 à 22, **caractérisé en ce que** la réaction est réalisée avec l'addition d'eau.

24. Procédé selon l'une ou plusieurs parmi les revendications 1 à 23, **caractérisé en ce que** l'on emploie de 0,00001 à 50% molaire du catalyseur, sur la base du nombre de liaisons C-C ou C-N à former.

25. Procédé selon l'une ou plusieurs parmi les revendications 1 à 24, **caractérisé en ce que** la purification est réalisée par extraction, éventuellement à l'aide d'agents de complexation, au moyen d'échangeurs d'ions, qui sont éventuellement fixés à la paroi du réacteur, ou par extraction par des acides minéraux inorganiques et éventuellement à température élevée.

26. Procédé selon la revendication 25, **caractérisé en ce que** la purification est réalisée lors d'une ou plusieurs étapes de mélange et de séparation dans le réacteur tubulaire continu.
